Europäisches Patentamt ·

(19) European Patent Office (11) Publication number: **0 084 764**

Office européen des brevets **B1**

(12) **EUROPEAN PATENT SPECIFICATION**

(45) Date of publication of patent specification: **09.03.88** (51) Int. Cl.⁴: **F 16 B 39/10**

(21) Application number: **82850251.8**

(22) Date of filing: **06.12.82**

(54) **A locking or securing device for a rotatable machine element such as a bolt or a nut.**

(30) Priority: **14.12.81 SE 8107472**

(43) Date of publication of application:
**03.08.83 Bulletin 83/31**

(45) Publication of the grant of the patent:
**09.03.88 Bulletin 88/10**

(84) Designated Contracting States:
**AT BE CH DE FR GB IT LI LU NL**

(56) References cited:
**AT-B- 153 434**
**DE-A-2 603 732**
**DE-A-2 840 180**
**DE-B-2 724 333**
**DE-C- 53 542**
**DE-C- 460 595**
**DE-C- 703 708**
**US-A-2 181 301**
**US-A-2 392 714**
**US-A-2 423 918**
**US-A-3 490 508**

**Patent Abstracts of Japan, Vol. 1, No. 78, 25
July 1977, page 1592M77**

(73) Proprietor: **AB Agora**
**P.O. Box 4086**
**S-350 04 Växjö (SE)**

(72) Inventor: **Olsson, Rolf**
**Öjabyvägen 50 B**
**S-352 50 Växjö (SE)**

(74) Representative: **Rostovanyi, Peter et al**
**AWAPATENT AB Box 5117**
**S-200 71 Malmö (SE)**

Courier Press, Leamington Spa, England.

## Description

The present invention relates to a device for locking rotatable machine elements on a structure, such as wheel nuts on a vehicle wheel, said device being designed as a substantially rectangular washer which is bent at its ends to form projections serving as spacing means for determining the distance of the washer from said structure, and consists of two locking elements which are connected to each other by means of a connecting portion and each of which has an opening provided for receiving a machine element and defined by a toothed portion for engaging the respective machine element, said openings being so dimensioned that the toothed portions defining said openings are brought into engagement with the respective machine element under deformation when the washer is positioned for locking the machine elements.

It is often necessary to lock or secure rotatable machine elements so that they are not unintentionally rotated or turned under the influence of vibrations or other movements to a position in which they do not fulfil their intended function. In the case of machine elements provided with edged portions, such as bolts and nuts, it is for this purpose previously known to use a locking device as disclosed in US—A—2,423,918. This known locking device, which is of the type stated by way of introduction, suffers from the drawback that when subjected to vibrations it is most liable to loosen from the machine elements and slide off them.

The object of the invention is to overcome this drawback and to provide a simple, easily mounted and reliable locking device of the type described above, which is especially well suited for locking or securing wheel nuts on a vehicle wheel.

In order to comply with this object, the locking device according to the invention is characterized in that the four corners of the washer are bent for forming said projections, that said connecting portion is adapted when in the unstressed state to retain the locking elements in such a position that they make an angle with each other, and that said connecting portion is so resilient that the locking elements are yieldingly adjustable into alignment with each other.

By these features, there is obtained a safe engagement between the toothed portions and the respective machine element.

The invention is described in the following with reference to the accompanying drawings.

Fig. 1 shows a vehicle wheel on which two wheel nuts are secured by means of a locking device according to the invention.

Fig. 2a is a plan view of the locking device according to the invention shown in Fig. 1.

Fig. 2b is a side view of the locking device shown in Fig. 2a.

Fig. 3 is a side view of the locking device according to Figs. 2a and 2b in its position of use.

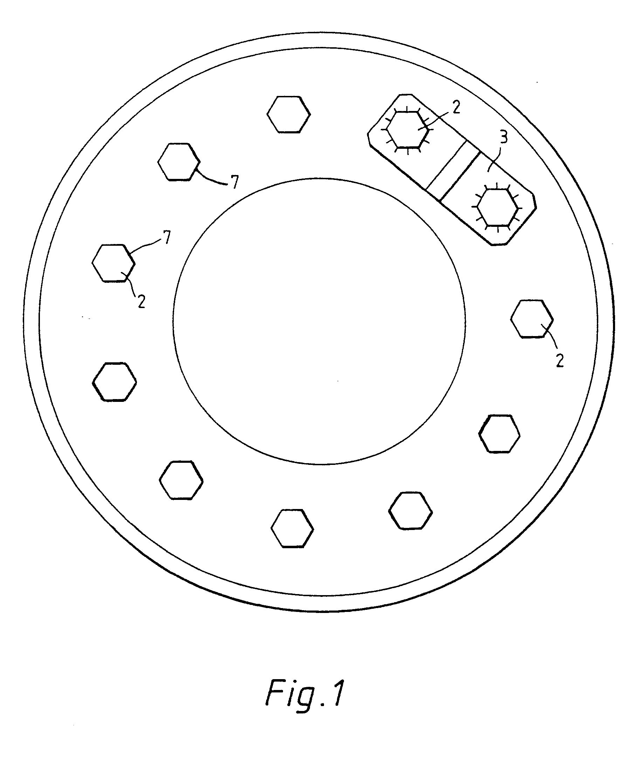

In Fig. 1 there is shown the central part of a vehicle wheel 1 having eleven hexagonal wheel nuts 2. According to Fig. 1, two of the wheel nuts 2 are locked by means of a locking device 3 according to the invention. The locking of the wheel nuts 2 is provided by having each wheel nut received in an opening in the locking device at a firm engagement between the portions of the locking device defining the openings therein and the outer surfaces 7 of the wheel nuts 2 and by the fact that the locking device is secured against rotation.

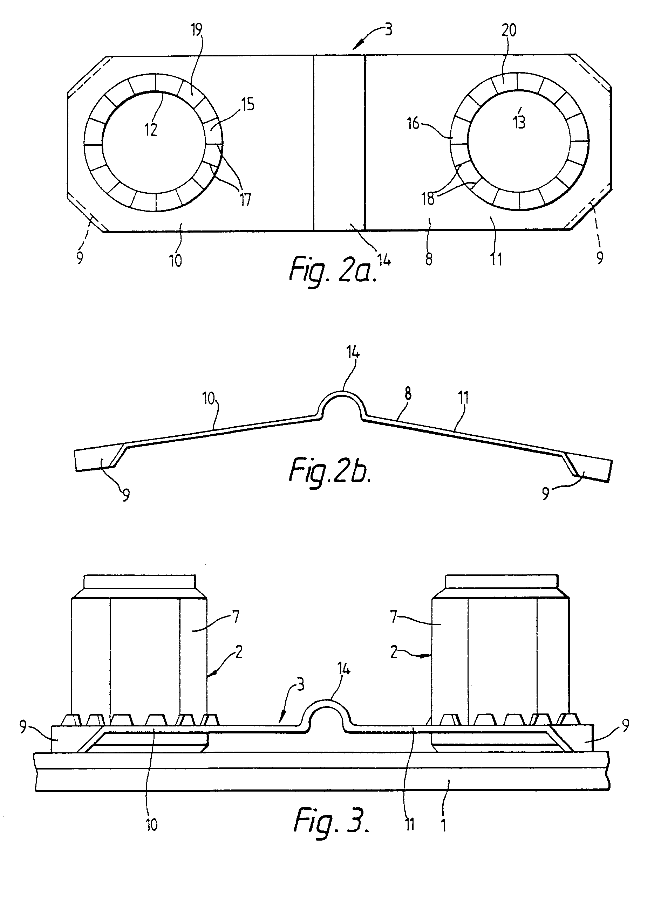

As appears from Figs. 2a and 2b, the locking device 3 is constituted by a substantially rectangular washer 2 which preferably consists of sheet metal. The four corners of the washer 8 are cut and bent as shown in Fig. 2b for constituting four downwardly directed projections 9. The projections 9 constitute spacing means for defining the distance of the washer 8 from the wheel 1. The washer 8 can be considered to consist of two locking elements 10 and 11 connected with each other and each provided with an opening 12 and 13, respectively. The elements 10 and 11 are connected with each other by means of a bent connection portion 14 which in its unstressed condition retains the elements 10 and 11 in such a relative position that the elements form an angle in relation to each other. The connection portion 14 is resilient so that the elements 10 and 11 can be elastically positioned in alignment with each other.

The portions 15 and 16 of the elements 10 and 11 defining the openings 12 and 13, respectively, are designed so as firmly to engage the wheel nuts 2 while being deformed when the locking device is applied to the nuts. According to Fig. 2a the portions 15 and 16 are provided with slots 17 and 18, respectively, forming teeth 19 and 20, respectively, between themselves. It is, of course, possible to design the teeth in any desired way by providing slots 17 and 18 having desired width and shape.

In Fig. 3 there is shown how the locking device according to Figs. 2a and 2b is applied to a pair of wheel nuts 2. The locking or securing device 3 is pressed onto the wheel nuts 2 while the elements 10 and 11 are in a position which is substantially perpendicular to the planes of the outer surfaces 7 of the nuts. Thereby, the teeth 19 and 20, respectively, are deformed by being deflected in the manner shown in Fig. 3, so that there is established a firm engagement between the teeth 19 and 20 on one side and the outer surfaces 7 of the nuts 2 on the other side. The locking device 3 is displaced so far onto the nuts 2 that the projections 9 will engage the side surface of the vehicle wheel 1.

The appliance of the locking device 3 on the wheel nuts is preferably conducted by means of a special tool (not shown). When the position according to Fig. 3 has been reached, the tool is removed, whereby the locking device acts for reverting to the position shown in Fig. 2b, wherein the elements 10 and 11 form an angle in relation to each other. Thus, the elements 10 and 11 are striving to take a canted position in relation to a plane extending perpendicular to the outer surfaces 7 of the nuts 2. Thereby, there is provided a fastening of the elements 10 and 11 on the nuts 2 engaged thereby. The elements 10 and 11 secure each other with regard to rotation which provides that the elements 10 and 11 prevent an unintentional rotation of the nuts 2.

## Claim

A device for locking rotatable machine elements (2) on a structure (1), such as wheel nuts on a vehicle wheel, said device being designed as a substantially rectangular washer (8) which is bent at its ends to form projections (9) serving as spacing means for determining the distance of the washer from said structure, and consists of two locking elements (10, 11) which are connected to each other by means of a connecting portion (14) and each of which has an opening (12, 13) provided for receiving a machine element (2) and defined by a toothed portion (15, 16) for engaging the respective machine element, said openings being so dimensioned that the toothed portions defining said openings are brought into engagement with the respective machine element under deformation when the washer is positioned for locking the machine elements, characterized in that the four corners of the washer (8) are bent for forming said projections (9), that said connecting portion (14) is adapted when in the unstressed state to retain the locking elements (10, 11) in such a position that they make an angle with each other, and that said connecting portion (14) is so resilient that the locking elements are yieldingly adjustable into alignment with each other.

## Patentanspruch

Einrichtung zum Sichern von drehbaren Maschinenelementen (2) an einer Konstruktion (1), wie den Radmuttern eines Fahrzeugrades, welche Einrichtung die Form einer hauptsächlich rechteckigen Scheibe (8) hat, die an ihren Enden umgebogen ist, um Vorsprünge (9) zu bilden, die als Abstandglieder zur Bestimmung des Scheibenabstands von der genannten Konstruktion dienen, und aus zwei miteinander mittels eines Verbindungsteils (14) verbundenen Sperrgliedern (10, 11) besteht, die je eine zur Aufnahme eines Maschinenelements dienende Öffnung (12, 13) besitzen, die von einem gezackten Teil (15, 16) zum Eingriff mit dem diesbezüglichen Maschinenelement abgegrenzt ist, wobei die Öffnungen derart bemessen sind, dass die die Öffnungen abgrenzenden, gezackten Teile mit dem diesbezüglichen Maschinenelement unter Deformierung in Eingriff geführt werden, wenn die Scheibe zum Sperren der Maschinenelemente auf ihren Platz gebracht wird, dadurch gekennzeichnet, dass die vier Ecken der Scheibe (8) abgebogen sind, um die genannten Vorsprünge (9) zu bilden, dass der Verbindungsteil (14) im entlasteten Zustand die Sperrglieder (10, 11) in einer solchen Lage hält, dass sie einen Winkel miteinander einschliessen, und dass der Verbindungsteil (14) derart federnd ausgebildet ist, dass die Sperrglieder nachgiebig fluchtrecht einstellbar sind.

## Revendication

Dispositif de blocage d'organes de machine rotatifs (2) sur une structure (1), tels que des écrous de roue sur une roue de véhicule, ledit dispositif étant conçu sous forme d'une plaquette sensiblement rectangulaire (8) qui est cintrée à ses extrémités pour former des saillies (1) servant de moyens d'écartement pour déterminer la distance entre la plaquette et ladite structure, et qui est constituée de deux éléments de blocage (10, 11) qui sont reliés l'un à l'autre au moyen d'une portion de liaison (14) et dont chacun présente une ouverture (12, 13) prévue pour recevoir un organe de machine (2) et définie par une portion dentée (15, 16) pour venir en prise avec l'organe de machine respectif, lesdites ouvertures étant dimensionnées de façon telle que les portions dentées qui définissent lesdites ouvertures sont amenées en prise avec l'organe de machine respectif en se déformant lorsque l'on positionne la plaquette pour bloquer les organes de machine, dispositif caractérisé en ce que les quatre coins de la plaquette (8) sont pliés pour former lesdites saillies (9); en ce que ladite portion de liaison (14) est prévue, lorsqu'elle est dans l'état non contraint, pour retenir les éléments de blocage (10, 11) dans une position telle qu'ils font un angle l'un avec l'autre; et en ce que ladite portion de liaison (14) est suffisamment élastique pour que l'on puisse amener les éléments de blocage en alignement l'un avec l'autre en restant dans la limite élastique.

Fig.1

0 084 764

Fig. 2a.

Fig. 2b.

Fig. 3.

2